# FASCICULE DE BREVET EUROPEEN

(11) **EP 2 759 473 B1**
(45) Date de publication et mention de la délivrance du brevet: **29.07.2015**
(21) Numéro de dépôt: 14000191.8
(22) Date de dépôt: 20.01.2014
(51) Int. Cl.: B64C 27/56, G05G 9/047

(54) **Organe de commande muni d'un levier de pas collectif de pales et d'un moyen de commande en lacet, et aéronef avec un tel organe de commande**
Kontrollmittel beinhaltend einen Kollektivhebel zur Blattverstellung sowie Mittel zur Giersteuerung und ein Luftfahrzeugzeug mit solch einem Kontrollmittel
Control mean provided with a collective lever blade pitch control and with means for yaw control as well as an aircraft with such a control mean

(30) Priorité: 29.01.2013 FR 1300186
(43) Date de publication de la demande: 30.07.2014
(73) Titulaire: Airbus Helicopters, 13725 Marignane Cedex (FR)
(72) Inventeur: Kerdreux, Christelle, F-13880 Velaux (FR); Colaprisco, Marc, F-13180 Gignac LA Nerthe (FR); Bardet, David, F-13300 Salon de Provence (FR)
(74) Mandataire: Pouillot, Laurent Pierre Paul

(56) Documents cités:
- JP-A- 2009 073 355
- US-A- 4 819 896
- US-A- 5 395 077
- US-A1- 2004 130 529

## Description

La présente invention concerne un organe de commande muni d'une part d'un levier pour la commande du pas collectif des pales d'un rotor de sustentation de giravion, et d'autre part d'un moyen de commande en lacet pour piloter le mouvement en lacet de l'aéronef. L'invention vise aussi un aéronef pourvu d'un tel organe de commande.

L'invention est du domaine des giravions, et plus particulièrement des moyens de commande affectés au pilotage directionnel en lacet du giravion.

Un giravion comporte une voilure tournante. La voilure tournante est alors pourvue d'au moins un rotor de sustentation muni d'une pluralité de pales. Le rotor de sustentation participe donc à la sustentation de l'aéronef, voire aussi à sa propulsion dans le cadre d'un hélicoptère par exemple.

De plus, le giravion peut comprendre un dispositif de contrôle du mouvement en lacet de ce giravion. Selon les giravions, le dispositif de contrôle du mouvement en lacet peut être réalisé à l'aide d'un rotor additionnel, d'au moins une hélice propulsive ou encore d'un dispositif d'éjection de fluide par exemple.

Dès lors, le giravion est équipé d'une pluralité de moyens de commande qui sont manoeuvrables par un pilote pour piloter le giravion. Un pilote déplace alors les moyens de commande afin de générer des ordres de commande. Ces ordres de commande provoquent ainsi une manoeuvre de la voilure tournante et/ou du dispositif de commande du mouvement en lacet.

Les ordres de commande peuvent être transmis mécaniquement ou électriquement, notamment à des servocommandes pour modifier le pas de pales d'un ensemble tournant.

Pour la commande d'un rotor de sustentation, les moyens de commande sont par exemple reliés à des servocommandes déplaçant un ensemble de plateaux dits « plateaux cycliques ». Cet ensemble de plateaux comprend alors un plateau non tournant relié aux servocommandes et un plateau tournant relié à chaque pale d'un rotor de sustentation.

Par suite, un giravion peut comprendre un organe de commande de pas collectif agissant sur le pas collectif des pales de la voilure tournante, et un organe de commande cyclique agissant sur le pas cyclique des pales de cette voilure tournante.

L'organe de commande de pas collectif comporte usuellement un levier apte à effectuer un mouvement rotatif dans un plan sensiblement vertical. L'organe de commande de pas collectif est ainsi dénommé « levier de pas collectif ».

L'organe de commande de pas cyclique comporte usuellement un manche apte à effectuer un mouvement rotatif autour de deux axes. L'organe de commande de pas cyclique est ainsi parfois dénommé « manche cyclique ».

En outre, un giravion peut comprendre un organe de commande en lacet de type palonnier pour le contrôle en lacet du giravion via le dispositif de contrôle du mouvement en lacet. Le palonnier peut par exemple contrôler le pas collectif des pales d'un rotor additionnel.

Un tel palonnier est intéressant mais présente l'inconvénient d'obstruer le champ de vision d'un pilote vers l'avant et vers le bas.

De plus, le palonnier peut induire des problèmes d'ergonomie liés à la taille des pilotes.

De même, le palonnier peut induire des problèmes d'ergonomie liés à la hauteur limite d'une planche de bord surplombant ce palonnier. En effet, les genoux du pilote risquent de heurter une telle planche de bord lorsque le pilote déplace le palonnier avec ses pieds.

Enfin, l'utilisation d'un palonnier peut requérir un effort intellectuel à un pilote pour éviter une commande en lacet allant dans un sens contraire au sens souhaité.

Parmi l'état de la technique, le document FR 2 479 133 propose un système de commande à quatre axes de pilotage pour contrôler un pas collectif, un pas cyclique selon un axe longitudinal, un pas cyclique selon un axe transversal et un mouvement en lacet.

Le document US 5 395 077 propose de remplacer un palonnier par une manette de commande. La manette est fixée à une base par une articulation à deux axes perpendiculaires. Cette manette peut alors effectuer un mouvement rotatif dans un plan vertical autour d'un premier axe pour transmettre un ordre de commande d'un pas collectif, et dans un plan horizontal autour d'un deuxième axe pour transmettre un ordre de commande d'un mouvement en lacet.

Le document US 4 819 896 suggère l'agencement d'une poignée tournante sur un manche de commande cyclique.

Le document US 2004/0130529 présente un dispositif muni d'un levier s'étendant en élévation à partir d'un support vers une poignée.

On connait aussi le document JP 2009 073355.

La présente invention a alors pour objet de proposer un organe de commande de pas collectif innovant pour supprimer un palonnier de giravion.

Selon l'invention, un organe de commande est muni d'un levier de pas collectif pour contrôler un pas collectif d'une pluralité de pales d'au moins un rotor de sustentation d'une voilure tournante d'un giravion. Le levier de pas collectif s'étend alors d'une première extrémité vers une deuxième extrémité, l'organe de commande ayant une articulation articulée à la première extrémité pour permettre une rotation du levier selon un plan vertical autour d'un premier axe afin de générer un ordre de commande pour commander le pas collectif desdites pales.

De plus, l'organe de commande est destiné à un giravion comprenant un dispositif de commande du mouvement en lacet. Un tel dispositif de commande du mouvement en lacet peut inclure un rotor additionnel tel qu'un rotor arrière ou un second rotor de sustentation, au moins une hélice, au moins un volet, ou encore un dispositif d'éjection de fluide sans sortir du cadre de l'invention. L'invention s'applique donc à tout aéronef muni d'au moins un rotor de sustentation et d'un dispositif de contrôle de son mouvement en lacet.

L'organe de commande comporte de manière remarquable une poignée pour commander un tel dispositif de commande du mouvement en lacet. La poignée est solidaire d'une couronne interne guidée en rotation autour d'un deuxième axe par une couronne externe solidaire de la deuxième extrémité, afin qu'une rotation d'une main d'un pilote saisissant cette poignée entraîne une rotation de la poignée par rapport à la couronne externe pour générer un ordre de commande du mouvement en lacet. De plus, la couronne interne est solidaire de la couronne externe et du levier en rotation autour du premier axe, afin qu'un mouvement en élévation de la main génère une rotation du levier autour du premier axe pour générer un ordre de commande du pas collectif.

Par conséquent, l'organe de commande permet de générer un ordre de commande de pas collectif et un ordre de commande de mouvement en lacet. L'invention autorise alors la suppression d'un palonnier usuel.

De plus, le mouvement réalisé par un pilote pour le contrôle du mouvement en lacet de l'aéronef est très intuitif. Une rotation selon le sens senestrorsum peut induire un mouvement en lacet du giravion selon ce sens senestrorsum, et inversement.

L'organe de commande peut de plus comporter une ou plusieurs des caractéristiques additionnelles qui suivent.

Notamment, la couronne interne et la couronne externe comprennent éventuellement un axe de révolution commun, cet axe de révolution étant confondu avec le deuxième axe.

Par suite, un pilote peut manoeuvrer la poignée pour générer un ordre de mouvement en lacet sans déplacer son avant-bras. Le travail du pilote est alors facilité.

Par ailleurs, la poignée peut être montée pivotante sur le levier de pas collectif autour d'un deuxième axe perpendiculaire à un axe longitudinal d'extension du levier.

L'ergonomie de l'organe de commande est ainsi améliorée, le deuxième axe de cet organe de commande étant sensiblement présent dans l'alignement de l'avant-bras du pilote.

Ce deuxième axe peut notamment être parallèle à un plan sagittal de l'hélicoptère pour que le mouvement rotatif du pilote soit représentatif du mouvement en lacet généré.

En outre, la couronne interne peut être au moins partiellement inscrite dans la couronne externe.

Par exemple, un rebord de la couronne externe enserre la couronne interne pour solidariser les couronnes externe et interne en rotation autour du premier axe.

Selon une autre variante, la couronne externe est au moins partiellement inscrite dans la couronne interne.

Par ailleurs, l'organe de commande peut comporter un moyen de mesure pour mesurer la position angulaire de la couronne interne par rapport à une référence de lacet.

Ce moyen de mesure inclut par exemple un capteur connu sous l'acronyme RVDT (« Rotary Variable Differential Transformer » en langue anglaise). Le capteur RVDT est éventuellement agencé dans le levier.

La référence de lacet est éventuellement un point de référence de la couronne externe, du levier, voire un axe longitudinal d'extension du levier.

L'organe de commande peut en outre comporter un système de mesure pour mesurer la position angulaire du levier par rapport à une référence de pas collectif.

Ce système de mesure comprend par exemple un capteur RVDT.

L'organe de commande peut ainsi générer des signaux de mesure suite à une rotation de la poignée et/ ou du levier.

L'organe de commande comportant un moyen de mesure pour mesurer la position angulaire de la couronne interne par rapport à une référence de lacet et un système de mesure pour mesurer la position angulaire du levier par rapport à une référence de pas collectif, cet organe de commande est favorablement muni d'une unité de traitement reliée au moyen de mesure et au système de mesure pour générer un ordre de commande du mouvement en lacet en fonction de la position angulaire de la poignée et un ordre de commande de pas collectif en fonction de la position angulaire du levier.

Les signaux de mesure sont donc transmis à l'unité de traitement. Cette unité de traitement traite les signaux de mesure pour générer des signaux de commande de pas collectif et/ou de lacet. Les signaux de commande sont alors transmis à au moins un rotor de sustentation et/ ou un dispositif de contrôle du mouvement en lacet. Plus particulièrement, les signaux de commande peuvent être transmis à des servocommandes aptes à modifier le pas des pales d'au moins rotor de sustentation et/ ou d'un dispositif de contrôle du mouvement en lacet.

Un signal de commande de mouvement en lacet est relatif indifféremment à une information de vitesse angulaire de lacet ou une information d'un facteur de charge latéral ou une information de dérapage par rapport au sol.

L'organe de commande peut aussi inclure un moteur électrique fournissant un effort de rappel.

Outre un organe de commande, l'invention vise aussi un giravion comprenant au moins un rotor de sustentation d'une voilure tournante muni d'une pluralité de pales et un dispositif de commande du mouvement en lacet.

Ce giravion est muni d'un organe de commande tel que décrit précédemment pour contrôler le pas collectif des pales et le dispositif de commande du mouvement en lacet

L'organe de commande pouvant comporter une poignée solidaire d'une couronne interne guidée en rotation autour d'un deuxième axe par une couronne externe, le deuxième axe de rotation de ladite poignée dans la couronne externe est d'une part situé dans le prolongement de l'avant-bras d'un pilote et, d'autre part est parallèle à un plan sagittal du giravion.

L'invention et ses avantages apparaîtront avec plus de détails dans le cadre de la description qui suit avec des exemples de réalisation donnés à titre illustratif en référence aux figures annexées qui représentent :
- la figure 1, un schéma présentant un giravion comprenant un organe de commande selon l'invention,
- la figure 2, un schéma montrant une poignée d'un organe de commande selon l'invention,
- la figure 3, un schéma montrant une couronne interne enserrée dans une couronne externe,
- la figure 4, un schéma montrant une couronne interne enserrant une couronne externe, et
- la figure 5, un schéma montrant un organe de commande selon l'invention

Les éléments présents dans plusieurs figures distinctes sont affectés d'une seule et même référence.

On note que trois directions X, Y et Z orthogonales les unes par rapport aux autres sont représentées sur certaines figures.

La première direction X est dite longitudinale. Le terme « longitudinal » est relatif à toute direction parallèle à la première direction X.

La deuxième direction Y est dite transversale. Le terme « transversal » est relatif à toute direction parallèle à la deuxième direction Y.

Enfin, la troisième direction Z est dite en élévation. L'expression « en élévation » est relative à toute direction parallèle à la troisième direction Z.

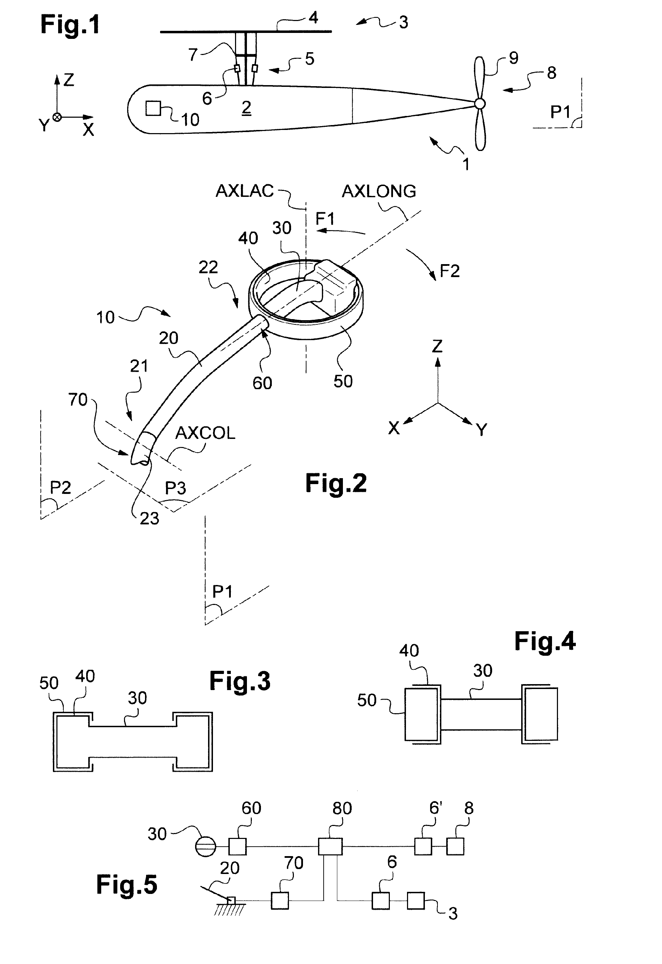

La figure 1 présente un giravion 1. Ce giravion comporte un fuselage 2 s'étendant longitudinalement le long d'un plan sagittal P1 d'un nez vers une portion arrière, transversalement d'un côté gauche vers un côté droit, et en élévation d'une portion inférieure vers une portion supérieure.

La portion supérieure du fuselage 2 porte une voilure tournante, cette voilure tournante ayant au moins un rotor de sustentation 3.

Le pas des pales 4 du rotor de sustentation est contrôlable collectivement et cycliquement par un ensemble de plateaux cycliques 7 déplacé par un système de mobilité 5. Ce système de mobilité peut être muni d'une pluralité de servocommandes 6.

De plus, le fuselage 2 porte un dispositif de commande du mouvement en lacet 8. Selon l'exemple représenté, ce dispositif de commande du mouvement en lacet 8 est un rotor arrière muni d'une pluralité de pales 9.

Le giravion est alors muni d'un organe de commande 10 pour contrôler le pas collectif des pales du rotor de sustentation 3, et le dispositif de commande du mouvement en lacet 8.

La figure 2 présente cet organe de commande 10.

L'organe de commande est muni d'un levier 20 qui s'étend d'une première extrémité vers une deuxième extrémité le long d'un axe longitudinal AXLONG.

La première extrémité 21 est alors articulée à un plancher P3 par une articulation 23. Dès lors, le levier 20 peut effectuer un mouvement rotatif autour d'un axe dénommé par commodité « premier axe AXCOL » dans un plan vertical P2. Ce plan vertical P2 est par exemple parallèle au plan sagittal P1 du giravion 1.

L'organe de commande est alors muni de moyens de transmission du mouvement afin qu'une rotation du levier induise une modification du pas collectif des pales du rotor de sustentation.

Par exemple, ces moyens de transmission du mouvement comprennent un système de mesure pour mesurer la position angulaire du levier 20 par rapport à une référence de pas collectif. Le système de mesure peut comporter un capteur RVDT.

De manière alternative, le levier peut coopérer avec une chaîne mécanique de transmission du mouvement.

Le levier représente donc un moyen de commande du pas collectif de pales.

Outre un moyen de commande du pas collectif de pales, l'organe de commande 10 comporte une poignée 30 pour commander le dispositif de commande du mouvement en lacet 8. Par exemple, la poignée permet de piloter le pas collectif des pales 9 d'un rotor du dispositif de commande du mouvement en lacet 8.

La poignée 30 peut porter une pluralité d'organes manoeuvrables, tels que les organes présents sur un levier de pas collectif de l'état de la technique.

Cette poignée 30 est solidaire d'une couronne interne 40 en étant inscrite au sein de cette couronne interne. Par conséquent, la poignée 30 peut s'allonger selon un diamètre de la couronne interne 40.

Dès lors, l'organe de commande 10 comporte une couronne externe 50 solidaire de la deuxième extrémité 22. La couronne externe 50 entoure alors la couronne 40 pour la guider en rotation autour d'un deuxième axe AXLAC.

Ce deuxième axe AXLAC peut être confondu avec les axes de symétrie des couronnes interne 40 et externe 50, parallèle au plan sagittal P1 du giravion, et sensiblement perpendiculaire à l'axe longitudinal AXLONG.

La poignée peut alors pivoter autour du deuxième axe AXLAC par rapport à la couronne externe 50 et donc au levier 20 pour commander le mouvement en lacet de l'aéronef.

Dès lors, l'organe de commande est muni de moyens de transmission du mouvement afin qu'une rotation de la poignée 30 autour du deuxième axe selon les flèches F1, F2 induise une modification du mouvement en lacet du giravion. Par exemple, ces moyens de transmission du mouvement comprennent un moyen de mesure pour mesurer la position angulaire de la poignée 30 par rapport à une référence de lacet. Le moyen de mesure peut comporter un capteur RVDT ou une chaîne mécanique de transmission du mouvement.

La couronne interne 40 peut donc effectuer un mouvement rotation autour du deuxième axe par rapport à la couronne externe 50. Par contre, la couronne interne 40 et la couronne externe 50 coopèrent l'une avec l'autre afin que la poignée soit solidaire en rotation du levier 20 autour du premier axe AXCOL.

Selon la réalisation de la figure 3, la couronne interne 40 est au moins partiellement inscrite dans la couronne externe 50.

Selon la réalisation alternative de la figure 4, la couronne externe 50 est au moins partiellement inscrite dans la couronne interne 40.

Par conséquent, pour contrôler le pas collectif des pales du rotor de sustentation et le mouvement en lacet du giravion, un pilote saisit la poignée 30.

En effectuant un mouvement rotatif avec sa main, le pilote contrôle le mouvement en lacet du giravion. Par contre en tirant ou en poussant la poignée, le pilote déplace le levier 20 et contrôle le pas collectif des pales du rotor de sustentation.

En référence à la figure 5, l'organe de commande 10 peut comprendre une unité de traitement 80 apte à générer des signaux de commande de pas collectif et de lacet en fonction de la position de la poignée 30 et du levier 20.

Cette figure 5 est schématique à des fins didactiques. En effet, le levier 20 et la poignée 30 sont normalement liés l'un à l'autre via les couronnes interne et externe.

Dès lors, un moyen de mesure 60 peut envoyer un signal de mesure à l'unité de traitement 80, le signal de mesure dépendant de la position angulaire de la poignée dans la couronne externe. L'unité de traitement en déduit un signal de commande transmis au dispositif de commande du mouvement en lacet 8. Par exemple, le signal de commande est transmis à au moins une servocommande électrique 6'.

De même, un système de mesure 70 peut envoyer un signal de mesure à l'unité de traitement 80, le signal de mesure dépendant de la position angulaire du levier par rapport au plancher P3. L'unité de traitement en déduit un signal de commande transmis au rotor de sustentation. Par exemple, le signal de commande est transmis à au moins une servocommande électrique 6'.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Organe de commande (10) muni d'un levier (20) de pas collectif pour contrôler un pas collectif d'une pluralité de pales (4) d'au moins un rotor de sustentation (3) d'un giravion (1), ledit giravion (1) ayant un dispositif de commande du mouvement en lacet (8), ledit levier (20) de pas collectif s'étendant d'une première extrémité (21) vers une deuxième extrémité (22), ledit organe de commande (10) ayant une articulation (23) articulée à ladite première extrémité (21) pour permettre une rotation dudit levier (20) selon un plan vertical (P2) autour d'un premier axe (AXCOL) afin de générer un ordre de commande du pas collectif desdites pales,
**caractérisé en ce que** ledit organe de commande (10) comporte une poignée (30) pour commander ledit dispositif de commande du mouvement en lacet (8), ladite poignée (30) étant solidaire d'une couronne interne (40) guidée en rotation autour d'un deuxième axe (AXLAC) par une couronne externe (50) solidaire de ladite deuxième extrémité (22) afin qu'une rotation d'une main d'un pilote saisissant ladite poignée (30) entraîne une rotation de ladite poignée (30) par rapport à ladite couronne externe pour générer un ordre de commande du mouvement en lacet, ladite couronne interne (40) étant solidaire de ladite couronne externe (50) et du levier (20) en rotation autour dudit premier axe (AXCOL), afin qu'un mouvement en élévation de ladite main génère une rotation dudit levier (20) autour dudit premier axe (AXCOL) pour générer un ordre de commande dudit pas collectif.

2. Organe selon la revendication 1,
**caractérisé en ce que** la couronne interne (40) et la couronne externe (50) comprennent un axe de révolution commun, ledit axe de révolution étant confondu avec ledit deuxième axe (AXLAC).

3. Organe selon l'une quelconque des revendications 1 à 2,
**caractérisé en ce que** ladite poignée (30) est montée pivotante sur ledit levier (20) de pas collectif autour d'un deuxième axe (AXLAC) perpendiculaire à un axe longitudinal (AXLONG) d'extension dudit levier (20).

4. Organe selon l'une quelconque des revendications 1 à 3,
**caractérisé en ce que** ladite couronne interne (40) est au moins partiellement inscrite dans ladite couronne externe (50).

5. Organe selon l'une quelconque des revendications 1 à 3,
**caractérisé en ce que** ladite couronne externe (50) est au moins partiellement inscrite dans ladite couronne interne (40).

6. Organe selon l'une quelconque des revendications 1 à 5,
**caractérisé en ce que** ledit organe de commande (10) comporte un moyen de mesure (60) pour mesurer la position angulaire de la couronne interne (40) par rapport à une référence de lacet.

7. Organe selon l'une quelconque des revendications 1 à 6,
**caractérisé en ce que** ledit organe de commande (10) comporte un système de mesure (70) pour mesurer la position angulaire du levier (20) par rapport à une référence de pas collectif.

8. Organe selon l'une quelconque des revendications 1 à 7,
**caractérisé en ce que** ledit organe de commande (10) comportant un moyen de mesure (60) pour mesurer la position angulaire de la couronne interne (40) par rapport à une référence de lacet et un système de mesure (50) pour mesurer la position angulaire du levier (20) par rapport à une référence de pas collectif, ledit organe de commande (10) comporte une unité de traitement (80) reliée au moyen de mesure (60) et au système de mesure (70) pour générer un ordre de commande pour commander le mouvement en lacet d'un aéronef en fonction de la position angulaire de ladite poignée (30) et un ordre de commande pour commander ledit pas collectif en fonction de la position angulaire dudit levier (20).

9. Giravion (1) comprenant au moins un rotor de sustentation (3) munie d'une pluralité de pales (4) et un dispositif de commande du mouvement en lacet (8),
**caractérisé en ce que** ledit giravion (1) est muni d'un organe de commande (10) selon l'une quelconque des revendications 1 à 8 pour contrôler un pas collectif desdites pales (4) du rotor de sustentation (3) et ledit dispositif de commande du mouvement en lacet (8).

10. Giravion selon la revendication 9,
**caractérisé en ce que** ledit organe de commande (10) comportant une poignée (30) solidaire d'une couronne interne (40) guidée en rotation autour d'un deuxième axe (AXLAC) par une couronne externe (50), ledit deuxième axe (AXLAC) de rotation de ladite poignée (30) dans ladite couronne externe (50) est d'une part situé dans le prolongement de l'avant-bras d'un pilote et, d'autre part est parallèle à un plan sagittal (P1) du giravion (1).

## Patentansprüche

1. Steuerorgan (10) mit einem Kollektivhebel (20) zur Steuerung einer Blattverstellung einer Mehrzahl von Rotorblättern (4) mindestens eines Auftriebsrotors (3) eines Drehflügelflugzeugs (1), wobei das Drehflügelflugzeug (1) eine Giersteuerungsvorrichtung (8) aufweist, wobei der Kollektivhebel (20) sich von einem Ende (21) zu einem zweiten Ende (22) erstreckt, wobei das Steuerorgan (10) ein Gelenk (23) aufweist, das an dem ersten Ende (21) angelenkt ist, um eine Drehung des Hebels (20) in einer vertikalen Ebene (P2) um eine erste Achse (AXCOL) zu erlauben, um einen Steuerbefehl zur Blattverstellung zu erzeugen,
**dadurch gekennzeichnet, dass** das Steuerorgan (10) einen Griff (30) aufweist zum Steuern der Vorrichtung zur Giersteuerung (8), wobei der Griff (30) mit einem inneren Kranz (40) fest verbunden ist, der um eine zweite Achse (AXLAC) drehbar durch einen äußeren Kranz (50) geführt ist, der mit dem zweiten Ende (22) fest verbunden ist, derart, dass eine Drehung einer Hand eines Piloten, der den Griff (30) ergreift, zu einer Drehung des Griffs (30) relativ zu dem äußeren Kranz führt, um einen Steuerbefehl für die Giersteuerung zu erzeugen, wobei der innere Kranz (40) bezüglich des äußeren Kranzes (50) und des Hebels (20) drehfest bezüglich einer Drehung um die erste Achse (AXCOL) ist, damit eine Hebebewegung der Hand eine Drehung des Hebels (20) um die erste Achse (AXCOL) erzeugt, um einen Steuerbefehl zur Blattverstellung zu erzeugen.

2. Organ nach Anspruch 1,
**dadurch gekennzeichnet, dass** der innere Kranz (40) und der äußere Kranz (50) eine gemeinsame Drehsymmetrieachse aufweisen, wobei die Drehsymmetrieachse mit der zweiten Achse (AXLAC) zusammenfällt.

3. Organ nach einem der Ansprüche 1 bis 2,
**dadurch gekennzeichnet, dass** der Griff (30) verschwenkbar auf dem Kollektivhebel (20) um eine zweite Achse (AXLAC) montiert ist, die senkrecht zu einer Längsachse (AXLONG) der Erstreckung des Hebels (20) verläuft.

4. Organ nach einem der Ansprüche 1 bis 3,
**dadurch gekennzeichnet, dass** der Innenkranz (40) zumindest teilweise in den äußeren Kranz (50) eingeschrieben ist.

5. Organ nach einem der Ansprüche 1 bis 3,
**dadurch gekennzeichnet, dass** der äußere Kranz (50) mindestens teilweise in den inneren Kranz (40) eingeschrieben ist.

6. Organ nach einem der Ansprüche 1 bis 5,
**dadurch gekennzeichnet, dass** das Steuerorgan (10) ein Mittel (60) zum Messen der Winkellage des inneren Kranzes (40) relativ zu einem Gierreferenzpunkt aufweist.

7. Organ nach einem der Ansprüche 1 bis 6,
**dadurch gekennzeichnet, dass** das Steuerorgan (10) ein Messsystem (70) zum Messen der Winkelstellung des Hebels (20) relativ zu einem Blattverstellungsreferenzpunkt aufweist.

8. Organ nach einem der Ansprüche 1 bis 7,
**dadurch gekennzeichnet, dass** das Steuerorgan (10) ein Mittel (60) zum Messen der Winkelstellung des inneren Kranzes (40) relativ zu einem Gierreferenzpunkt und ein Messsystem (50) zum Messen der Winkelstellung des Hebels (20) relativ zu einem Referenzpunkt der Blattverstellung aufweist, wobei das Steuerorgan (10) eine Verarbeitungseinheit (80) aufweist, die mit dem Messmittel (60) und dem Messsystem (70) verbunden ist, um einen Steuerbefehl zu erzeugen zum Steuern der Gierbewegung eines Luftfahrzeugs in Abhängigkeit von der Winkelstellung des Griffs (30) und um einen Steuerbefehl zu erzeugen zum Steuern der Blattverstellung in Abhängigkeit von der Winkelstellung des Hebels (20).

9. Drehflügelflugzeug (1) mit mindestens einem Auftriebsrotor (3), der mit einer Mehrzahl von Rotorblättern (4) versehen ist und mit einer Giersteuerungsvorrichtung (8),
**dadurch gekennzeichnet, dass** das Drehflügelflugzeug (1) mit einem Steuerorgan (10) nach einem der Ansprüche 1 bis 8 versehen ist, um die Blattverstellung der Rotorblätter (4) des Auftriebsrotors (3) und die Giersteuerungsvorrichtung (8) zu steuern.

10. Drehflügelflugzeug nach Anspruch 9,
**dadurch gekennzeichnet, dass** das Steuerorgan (10) einen Griff (30) aufweist, der mit einem inneren Kranz (40) fest verbunden ist, der um eine zweite Achse (AXLAC) drehbar von einem äußeren Kranz (50) geführt ist, wobei die zweite Achse (AXLAC) der Drehung des Griffs (30) in dem äußeren Kranz (50) einerseits in der Verlängerung des Vorderarms eines Piloten und andererseits parallel zu einer Sagittalebene (P1) des Drehflügelflugzeugs (1) angeordnet ist.

## Claims

1. A control member (10) equipped with a lever (20) for collective pitch, for controlling a collective pitch of a plurality of blades (4) of at least one lift rotor (3) of a rotorcraft (1), the said rotorcraft (1) having a device for controlling yaw movement (8), the said lever (20) for collective pitch extending from a first end (21) to a second end (22), the said control member (10) having an articulation point (23) that is articulated to the said first end (21) for allowing rotation of the said lever (20) in a vertical plane (P2), about a first axis (AXCOL), in order to generate a command for control of the collective pitch of the said blades,
**characterised in that** the said control member (10) includes a handle (30) for controlling the said device for controlling yaw movement (8), the said handle (30) being integral with an inner ring (40) that is guided in rotation about a second axis (AXLAC) by an outer ring (50) that is integral with the said second end (22) such that a rotation of a hand of a pilot grasping the said handle (30) brings about rotation of the said handle (30) in relation to the said outer ring in order to generate a command for control of yaw movement, the said inner ring (40) being integral with the said outer ring (50) and the lever (20) in rotation about the said first axis (AXCOL) such that a raising movement of the said hand generates a rotation of the said lever (20) about the said first axis (AXCOL) in order to generate a command for control of the said collective pitch.

2. A member according to Claim 1, **characterised in that** the inner ring (40) and the outer ring (50) comprise a common axis of revolution, the said axis of revolution being coincident with the said second axis (AXLAC).

3. A member according to either of Claims 1 and 2, **characterised in that** the said handle (30) is mounted to pivot, on the said lever (20) for collective pitch, about a second axis (AXLAC) that is perpendicular to a longitudinal axis (AXLONG) in the direction in which the said lever (20) extends.

4. A member according to any one of Claims 1 to 3, **characterised in that** the said inner ring (40) is at least partly inscribed in the said outer ring (50).

5. A member according to any one of Claims 1 to 3, **characterised in that** the said outer ring (50) is at least partly inscribed in the inner ring (40).

6. A member according to any one of Claims 1 to 5, **characterised in that** the said control member (10) includes a means (60) for measuring the angular position of the inner ring (40) in relation to a yaw reference.

7. A member according to any one of Claims 1 to 6, **characterised in that** the said control member (10) includes a system (70) for measuring the angular position of the lever (20) in relation to a reference for collective pitch.

8. A member according to any one of Claims 1 to 7, **characterised in that**, the said control member (10) including a means (60) for measuring the angular position of the inner ring (40) in relation to a yaw reference and a system (50) for measuring the angular position of the lever (20) in relation to a reference for collective pitch, the said control member (10) includes a processing unit (80) which is connected to the measuring means (60) and the measuring system (70) in order to generate a control command for control of the yaw movement of an aircraft as a function of the angular position of the said handle (30) and a control command for control of the said collective pitch as a function of the angular position of the said lever (20).

9. A rotorcraft (1) comprising at least one lift rotor (3) equipped with a plurality of blades (4) and a device for controlling yaw movement (8),
**characterised in that** the said rotorcraft (1) is equipped with a control member (10) according to any one of Claims 1 to 8 for controlling a collective pitch of the said blades (4) of the lift rotor (3) and the said device for controlling yaw movement (8).

10. A rotorcraft according to Claim 9,
**characterised in that**, the said control member (10) including a handle (30) which is integral with an inner ring (40) that is guided in rotation about a second axis (AXLAC) by an outer ring (50), the said second axis (AXLAC) of rotation of the said handle (30) in the said outer ring (50) is on the one hand located within the line along which the forearm of a pilot extends and is on the other hand parallel to a sagittal plane (P1) of the rotorcraft (1).
